# EUROPEAN PATENT APPLICATION

(11) **EP 4 778 610 A1**
(43) Date of publication of application: **22.07.2026**
(21) Application number: 24809393.2
(22) Date of filing: 12.09.2024
(51) Int. Cl.: B01D 24/00, B01D 24/02, B01D 24/12, B01D 24/42

(54) **FILTER FOR CLEAN WATER INSTALLATIONS**

(30) Priority: 12.09.2023 ES 202331606 U
(71) Applicant: Sacopa S.A.U., 17854 Sant Jaume de Llierca (Girona) (ES)
(72) Inventor: VILA CORTS, Francesc Xavier, 17854 SANT JAUME DE LLIERCA (Girona) (ES)
(74) Representative: Herrero & Asociados, S.L.
(86) International application number: PCT/ES2024/070558
(87) International publication number: WO 2025/056828

(57) **Abstract**

The filter for clean water installations (1) comprises a first level with one or more water inlets (2), a first filter bed (3) and a second level with one or more first water outlets (4), through which the filtered water exits. It includes a second filter bed (5) that additionally filters part of the water, and a third level with one or more second water outlets (6). Through the first outlet (4) most of the inlet flow is released, while the rest is released through the second outlet (6). The first filter bed (3) may be made of clay and arranged above the second filter bed (5). The water outlets (4) and (6) are located at the lower end of the first bed and below the second bed, respectively.

## Description

### Field of the invention

The present invention relates to a filter used for so-called clean water installations, such as, for example, swimming pools, spas, water parks, fountains, aquariums, etc., classified as closed loop installations.

### Background to the invention

For a correct maintenance of the water in these installations, it is necessary to use filters, which filter the water passing through a filter medium.

A commonly used filter medium for swimming pool filters is sand, perlite, diatomaceous earth, which is a naturally occurring agent with a high water filtration capacity. It is the most commonly used for the purification of water in swimming pools, both residential and public, spas, fountains, water parks, aquariums, etc.

Other filter media are also known to be used in filters for clean water installations, e.g. clay.

Currently known filters comprise a water inlet, with one or more filter beds and a filtered water outlet, so that the water enters the filter at the inlet, passes through the filter beds and exits at the outlet, with a single inlet and a single outlet.

These filters have a limited filtering capacity and in an installation of these characteristics it is necessary to use a plurality of filters, depending on their dimensions, with the consequent cost of the filters and the space required in the building.

### Description of the invention

Therefore, an objective of the present invention is to provide a filter for these installations that allows an increased filtering capacity, allowing the use of a smaller number of filters, a higher filtration quality than conventional filters, and a smaller installation space.

With the filter of the invention, the aforementioned disadvantages are solved, presenting other advantages that will be described below.

The filter for clean water installations according to the present invention is described in claim 1, and the dependent claims include additional features that are optional.

**In** particular, the filter for clean water installations comprises:
- a first level with one or more water inlets;
- a first filter bed to filter the water entering the filter;
- a second level with one or more first water outlets, through which the filtered water is discharged with a proportion of the flow rate; this filter bed, in the lower part, shall have the collector elements for the collection of the filtered water;
- a second filter bed, which additionally filters a part of the water filtered by the first filter bed; and
- a third level with one or more second water outlets, through which the water filtered by the second filter bed, i.e. the rest of the water to be filtered, exits. In the lower part there will also be a system of collectors or crepines to collect the filtered water.

Obviously, the number of levels with their respective outputs could be increased according to the needs of the installation.

In this way, a higher filtering capacity is achieved than in conventional water filters for clean water installations, thus reducing the number of filters required to filter the water in a swimming pool, as the first filter bed allows higher filtering speeds than the second filter bed. In this way, much more water can be filtered without reducing the filtration quality of the installation, i.e. the installation is classified as a closed loop installation.

The percentage of filtration between the first filter bed and the second filter bed may be programmable according to the needs of the installation, the most common value being 80 % through the first bed and 20 % through the second bed.

In the case of more levels, the percentage would obviously vary according to needs.

Advantageously, the first filter bed is made of clay or similar and the second of sand, garnet or similar.

According to a preferred embodiment, the first filter bed is located above the second filter bed in contact with each other, and the first water outlet is located at a lower end of the first filter bed, while the second water outlet is located below the second filter bed.

Both filter outlets shall have the respective collectors and/or crepines for collecting the filtered water.

### Brief description of the drawings

For a better understanding of what has been explained above, some drawings are included in which, schematically and only by way of a non-limiting example, a practical case of embodiment is represented.
Figure 1 is a schematic cross-sectional elevation view of the filter for clean water installations in accordance with the present invention; and
Figure 2 is a schematic of the operation of the filter for clean water installations according to the present invention in a filter circuit for example of a swimming pool.

### Description of a preferred embodiment

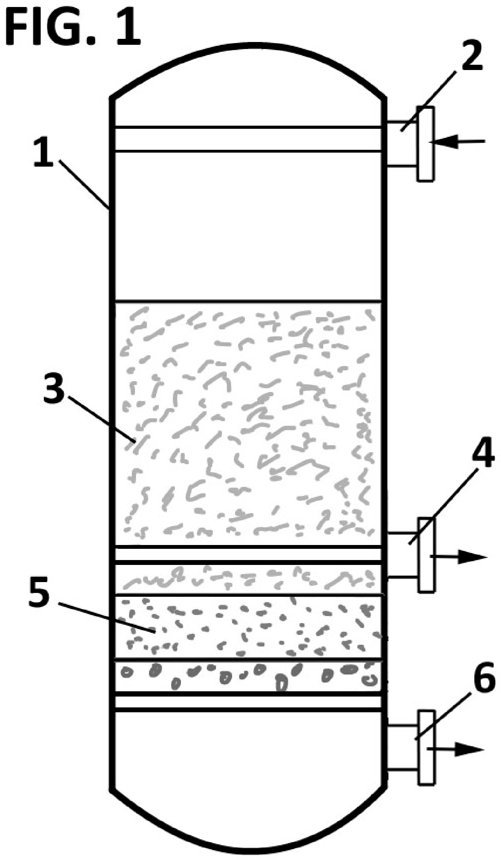

Figure 1 shows the filter for clean water installations (1) according to the present invention.

The filter for clean water installations (1) comprises a water inlet (2), through which water from a swimming pool enters, a first filter bed (3), where the water that has entered the filter (1) is filtered, and a first outlet (4), through which water that has been filtered through the first filter bed (3) exits.

According to a preferred embodiment, the first filter bed (3) is made of clay, which has demonstrated a high filtration capacity, and the first outlet (4) is located at the lower end of the first filter bed (3), as shown in Figure 1.

The filter for clean water installations (1) according to the present invention also comprises a second filter bed (5) located just below the first filter bed (3) and in contact with it, and a second outlet (6), through which the water that has been filtered through the second filter bed (5) exits.

As can be seen in figure 1, said second outlet (6) is located below said second filter bed (5), and said second filter bed (5) may be made of any suitable material, for example sand, garnet or similar.

Preferably, through the first water outlet (4) between 70 % and 90 % of the water flow entering the filter (1) through the water inlet (2) is discharged, and through the second water outlet (6) between 30 % and 10 % of the water flow entering the filter (1) through the water inlet (2) is discharged.

**In** particular, according to a preferred embodiment, through the first water outlet (4) 80 % of the water flow entering the filter (1) through the water inlet (2) exits, and through the second water outlet (6) 20 % of the water flow entering the filter (1) through the water inlet (2) exits.

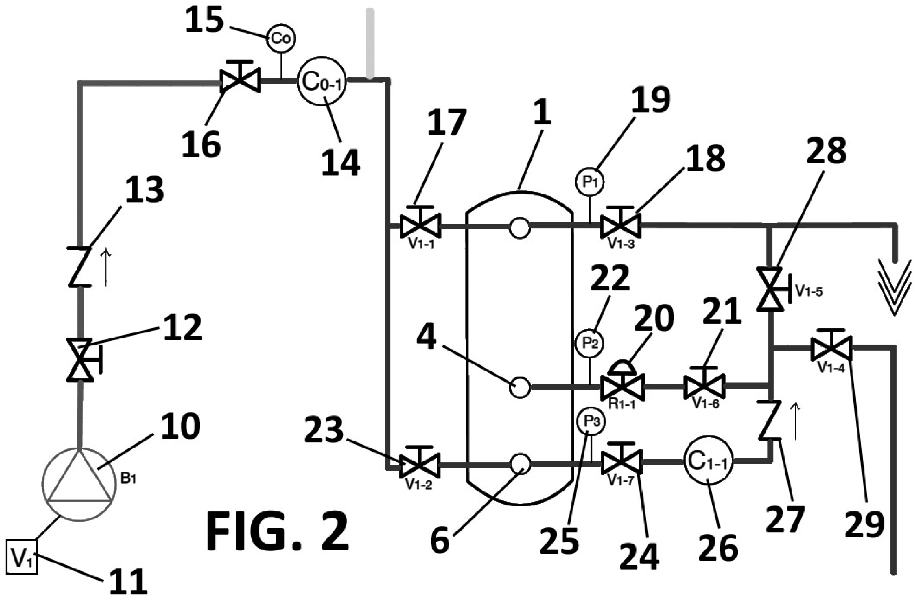

Figure 2 shows a schematic diagram of the operation of the filter (1) according to the present invention in a swimming pool filter circuit.

This filter circuit comprises a pump (10) connected to a frequency inverter (11), which pumps water from the pool to the filter (1) at a constant flow rate.

Downstream of the pump (10), the circuit comprises a first butterfly valve (12) and a non-return valve (13).

Upstream of the water inlet (2) of the filter (1), the circuit also comprises a meter (14) fitted with a conductivity sensor (15) and a butterfly valve (16).

The water inlet (2) is connected to two butterfly valves (17, 18), a pressure sensor (19) being arranged between the water inlet (2) and one of the two butterfly valves (18).

The first water outlet (4) comprises a pressure regulating valve (20), a butterfly valve (21) and a pressure sensor (22), while the second water outlet (6) comprises two butterfly valves (23, 24), a pressure sensor (25) and a counter (26).

In addition, the filter circuit also comprises a non-return valve (27) between the first outlet (4) and the second outlet (6), and two butterfly valves (28, 29), one between the water inlet (2) and the first outlet (6) and the other on the return to the pool.

During filtration, the flow rates programmed in the meters must be maintained by means of the pump's frequency variator. This regulation must be constant, balancing the changes in pressure due to saturation that both filter beds will have.

During filtering, water will enter the filter through the inlet (2) and the filtered water will exit through the two outlets (4, 6) back into the pool.

For flushing, the flushing configuration flow rates programmed in the meters via the frequency inverter must be maintained. In this case, the water enters the filter (1) through the second outlet (6) and leaves the filter (1) through the inlet (2) to the outside.

For rinsing, the flow rates programmed in the meters must be maintained via the frequency converter and the pressure regulating valve. In this case, the water enters the filter (1) through the inlet (2) and exits through the two outlets (4, 6), but the water does not return to the pool, but is expelled to the outside.

Although reference has been made to a specific embodiment of the invention, it is obvious to a person skilled in the art that the filter described is susceptible to numerous variations and modifications, and that all the details mentioned can be replaced by technically equivalent ones, without departing from the scope of protection defined by the appended claims.

## Claims

1. Filter for clean water installations (1), comprising:
- a first level with one or more water inlets (2);
- a first filter bed (3) for filtering the water entering the filter (1); and
- a second level with one or more first water outlets (4), from which filtered water flows out,
**characterized in that** the filter for clean water installations (1) also comprises:
- a second filter bed (5), which additionally filters a part of the water filtered by the first filter bed (3); and
- a third level with one or more second water outlets (6), through which the water filtered by the second filter bed (5) exits.

2. Filter for clean water installations (1) according to claim 1, wherein 70 to 90 % of the water flow entering the filter (1) via the water inlet (2) is discharged through the first water outlet (4) and 30 to 10 % of the water flow entering the filter (1) via the water inlet (2) is discharged through the second water outlet (6).

3. Filter for clean water installations (1) according to claim 2, wherein through the first water outlet (4) 80 % of the water flow entering the filter (1) through the water inlet (2) is discharged, and through the second water outlet (6) 20 % of the water flow entering the filter (1) through the water inlet (2) is discharged.

4. Filter for clean water installations (1) according to any one of the preceding claims, wherein the first filter bed (3) is made of clay.

5. Filter for clean water installations (1) according to any one of the preceding claims, wherein the first filter bed (3) is positioned above the second filter bed (5) in contact with each other.

6. Filter for clean water installations (1) according to any one of the preceding claims, wherein the first water outlet (4) is located at a lower end of said first filter bed (3).

7. Filter for clean water installations (1) according to any one of the preceding claims, wherein the second water outlet (6) is located below the second filter bed (5).
